# EUROPEAN PATENT APPLICATION

(11) **EP 2 003 099 A1**
(43) Date of publication of application: **17.12.2008**
(21) Application number: 08157355.2
(22) Date of filing: 30.05.2008
(51) Int. Cl.: C04B 24/02, C04B 26/04, C04B 26/06, C04B 26/18

(54) **Composition and method of obtaining an artificial stone material**

(30) Priority: 05.06.2007 IT VR20070078
(71) Applicant: Aros S.r.l., 37010 Affi (VR) (IT)
(72) Inventor: Catel, Guglielmo, 22070 Como (IT); Ferrario, Ruggero, 20083 Milano (IT); Testa, Giuseppe, 20090 Milano (IT)
(74) Representative: Reniero, Cirillo Silvano

(57) **Abstract**

The present invention relates to a composition for obtaining artificial stone materials, which composition includes a compound selected from the group comprising benzopinacol and at least one derivative thereof. The present invention also relates to a mixture for obtaining an artificial stone material, including a resin compound and the above mentioned composition in a percentage ranging from 0,1 to 10% by weight with respect to the resin compound.

## Description

The present invention relates to a composition for obtaining new artificial stone materials, a method of obtaining new artificial stone materials through such a composition, as well as a new use of benzopinacol and derivatives thereof.

At present, in order to obtain composite stone materials, e. g. artificial agglomerates of natural stones, such as marbles or granites, a thermosetting resin bonding agent, usually an unsaturated polyester resin, is mixed together with one or more filler components, e. g. oxides, carbonates, silicates, talc powders, ground stone materials and/or stone fragments, the resin bonding material being preferably added to the mixture in a percentage from 7 to 30% by weight. The fluid mixture thus obtained is then cast into suitable mould or cavities, where, possibly after further homogenization by subjecting it to the action of vibrators or shakers of any suitable type, so as to obtain an artificial stone material having a desired shape.

In order to allow hardening of the mixture to occur, small percentages of a polymerization initiator, a generator of radicals, which is significantly active when the temperature is increased above a predetermined threshold value, are added to the mixture. The polymerization initiator can be added to any mixing phase. Moreover, in order to better catalyze the decomposition of the polymerization initiator, percent fractions of transitional metal salts acting as reaction initiators can be added. Usually, peroxides having a decomposition temperature much higher than the conduction temperatures of the mixing phases are used, and as polymerization initiators organic cobalt salts (at various concentrations) in organic solvents, such as mineral turpentine, xilene, toluene, etc., are employed.

The hardening or polymerization of the mixture takes place in a polymerization oven at a predetermined temperature, the temperature being a function of the used polymerization initiator and the concentration of the reaction promoter, the reaction times varying from case to case.

The simultaneous presence of a polymerization initiator and the reaction promoter in the mixture can cause starting of the hardening or polymerization reaction according to kinetics that depends on concentration and temperature thereof (the reaction can also take place at room temperature). Accordingly, upon addition of the initiator and the promoter to the mixture, the mixture must be readily transferred from mixer to moulds, otherwise it would harden too much, which would also affect subsequent use of the mixer.

The main object of the present invention is to provide a composition that makes it possible to obtain a mixture for manufacturing new artificial materials or the like, when added to a bonding resin agent, which is more stable than the previously proposed mixtures and can be stocked in fluid state for long periods.

Another object of the present invention is to provide a composition for obtaining stone materials which involves low stocking costs.

According to a first aspect of the present invention, there is provided a composition for producing artificial stone materials, which includes a compound selected from the group comprising benzopinacol and at least one derivative thereof.

According to a second aspect of the present invention, there is provided a mixture for producing an artificial stone material comprising a resin compound and a composition comprising a compound selected from the group including benzopinacol and at least one derivative thereof in a percentage from 0,1 to 10% by weight with respect to the resin compound.

According to a third aspect of the present invention, there is provided a method of producing artificial stone materials, the method comprising the steps of:
- providing a composition including a compound selected from the group comprising benzopinacol and at least one derivative thereof;
- mixing said composition with at least one resin compound, thereby obtaining a fluid-pasty mixture;
- transferring the fluid-pasty mixture to at least one mould; and
- heating the mixture thus obtained to a temperature higher than a predetermined threshold value, thereby causing the polymerization thereof.

According to a forth aspect of the present invention there is provided a new use of benzopinacol or its derivatives to promote polymerization and control heat in a mixture for obtaining artificial stone materials.

The present invention provides a composition for obtaining artificial stone materials in the form of agglomerates and the like including benzopinacol and/or its derivatives, which is designed to generate radical species owing to thermal-decomposition or endothermic degradation, the composition being preferably added to one or more resin compounds, preferably unsaturated resin compounds, that are used as bonding agents.

The thermal-decomposition substantially occurs at temperatures higher than 60°C, and more significantly above a threshold value estimated to be about 90°C. At a temperature level higher than said threshold value and in order to obtain the generation of radical species, which are responsible for the initiation of radical polymerization in unsaturated resin systems used as bonding agents, a continuous heat supply is required.

Degradation reactions of benzopinacol with consequent production of radical species are illustrated hereinbelow. 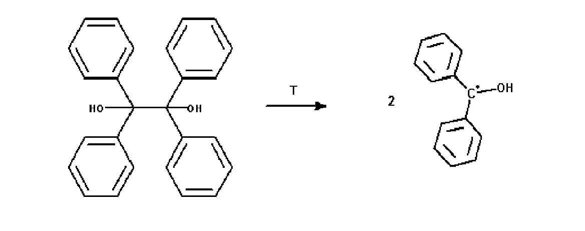 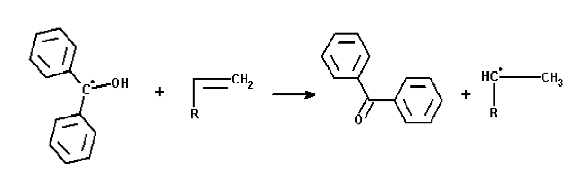 R= Aryl; -C00R, etc.

According to the above scheme, it will be noted that benzopinacol is first homeolythically heat decomposed and then hydrogen is transferred to the vinyl monomer. Said second step is the initiation of radicalic polymerization for an unsaturated resin compound. In the present description and the claims the term "unsaturated resin compound" indicates any resin comprising poly-addition or poly-condensation molecules or polymers containing unsaturations of the type specified in the structural formulae illustrated below, dissolved or not in vinyl, acrylic or metacrylic monomers.

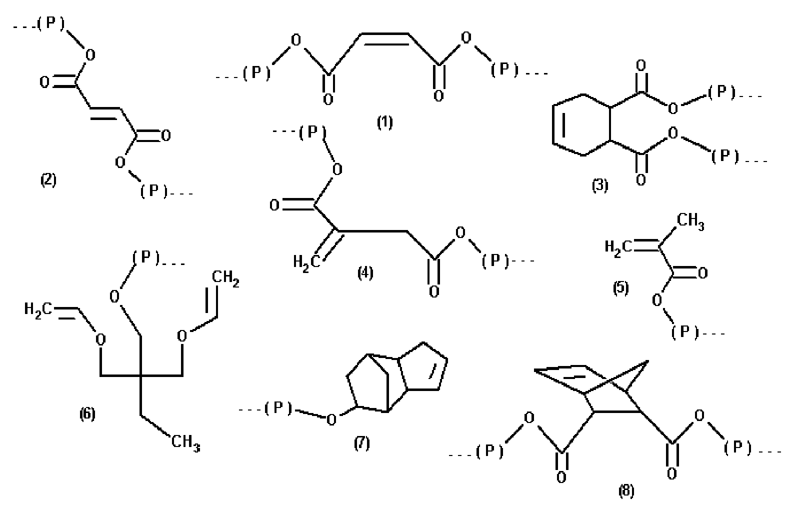

The above structural formulae are examples of characteristic unsaturations of thermosetting resin compounds, more particularly: 1) maleic; 2) fumaric; 3) tetrahydroftalic; 4) itaconic; 5) acrylic o metacrylic; 6) allylic; 7) dicyclopenthadienic terminal; 8) endomethylentetrahydroftal ic.

A composition according to the present invention preferably includes one or more dispersant agents, antioxidants and polymerization reaction promoters.

More particularly, the dispersant agent can comprise one substance or a mixture of substances and has the function of assisting disintegration of benzopinacol and/or its derivatives in the bonding resin compound. Thus, its nature depends on the used unsaturated resin compound. In a composition according to the present invention, the dispersant agent can be advantageously used in a percentage from 10 to 95% by weight.

The antioxidants are selected from the group comprising quinones, hydro-quinones, phenol derivatives, metallic complexes, metal salts and the like, which are designed to increase stability of the resin compound when stocked even at high temperatures, so as to ensure stability at 50°C for 30 days or more.

Promoters can be selected among acetacetate derivatives, transition metal salts, ammines and the like and have the function of reducing hardening time. They are active only above a temperature threshold at which endothermic decomposition of benzopinacol and/or its derivatives initiates.

A composition according to the present invention is added to a resin compound, preferably in the range between 0,1 and 10% by weight with respect to the resin compound. Such a composition can be directly mixed with the resin compound, or can be added to a resin compound, e. g. loaded with powders of oxides, carbonates, silicates, talc, ground stone materials and/or fragments of stone materials, usually employed in the art of production of artificial stone agglomerates, in any step of the production process of said compound.

Some presently preferred embodiments of a composition according to the present invention, its application to a resin compound as well as the production of an artificial stone material are given below.

### Preparation of the composition

40.00 g of benzopinacol were mixed with 49.80 g of tristyrilphenol at a temperature lower than 50°C. Then, 10.00 g of dietylacetacetammide and 0.20 g of trimethylhydrochinone were added and the composition thus obtained was homogenized. A very fluid homogeneous light yellow coloured paste was obtained.

Sedimentation stability and chemical stability of the composition were checked for more than 5 days while keeping the temperature at 70°C.

### Example 1

5.00 g of the composition as obtained in the manner indicated above were added to 200 g of orthoftalyc unsaturated polyester resin with a solid content of 64%. The mixture thus obtained was homogenized.

100 g of the mixture thus obtained were transferred in a container shaped as a Teflon plate, which was transferred into a forced ventilation stove at 130°C for 30 min. An integral and hardened light yellow coloured plate with a regular surface was thus obtained, showing poor volumetric reduction effect and thus good dimensional stability in time.

50 g of the mixture were also transferred into a brown glass bottle which was sealed with a plug and a counterplug. The bottle was then transferred into a forced ventilation stove at 50°C. Gel formation was observed in the mixture more than 30 days later.

### Example 2

2.50 g of the composition obtained as indicated above were added to 100 g of orthoftalic unsaturated polyester resin with a solid content of 64%. The mixture thus obtained was homogenized.

12 g of this mixture were added to a load of 88 g of calcium carbonate and talc in the ratio 7:1, with the addition of a red pigment, and then transferred into a mortar and manually worked into a daugh. After thorough grinding an homogeneous mixture was obtained which was pressed into a cylindrical Teflon container and transferred into a forced ventilation stove at 130°C for 30 min. A compact perfectly hardened red coloured homogeneous plate was obtained which was resistant to scratch test. Even after severe thermal shocks no fractures were observed in the plate.

### Example 3

1.5 g of the composition obtained as indicated above were added to 50 g of unsaturated polyester resin with a high level of maleic unsaturation (22%) at a concentration of 64% by weight in mixture with acrylic and vinyl monomer reactant free from styrene. The mixture thus obtained was homogenized.

30 g of such a mixture were poured into a metallic container having a circular surface or base having a diameter of 86 mm and a peripheral wall 9 mm high from the base.

Such container was then transferred to a forced ventilation stove at 100°C for 1 hour.

The experiment was then repeated, while pre-accelerating the resin compound with a 0,1% by weight solution of organic cobalt salts having a 6% by weight metal content, and with a tert-butylperbenzoate catalyst at 2% by weight in acetyl-acetone at 80% by weight.

To 30 g of the mixture thus obtained, the same conditions as those applied to the mixture obtained from the unsaturated polyester resin with high maleic unsaturation content (22%) together with a composition according to the invention, were applied.

Both containers were extracted form the stove, and two perfectly hardened plates were obtained. However, the second plate (the plate free of benzopinacol) was found to be warped with conspicuous reduction in volume and intensely pink coloured, whereas the first plate showed only a slight change in colour with respect to the fluid phase and low reduction in volume.

Further 20 grams of both mixtures thus obtained were kept at room temperature. After 24 hours the mixture obtained with benzopinacol was still fluid, whereas the mixture with no benzopinacol was fully hardened.

### Example 4

1,50 g of the composition obtained as indicated above were added to 50 g of unsaturated orthoftalic polyester resin with a solid content of 64%. The mixture thus obtained was then homogenized.

The experiment was repeated by pre-accelerating 50g of resin compound including 0,1% by weight of a solution of organic cobalt salts having a metal content of 6,0% by weight, and a catalyst including 2% by weight tert-butylperbenzoate in 80% acetyl-acetone.

40 g of both mixtures thus obtained were poured into a respective metallic container having a circular surface or base with a diameter of 86 mm and a peripheral wall 9 mm high from the base. Both containers were transferred to a forced ventilation stove at 100°C for 1 hour.

Once the composition was hardened into a plate, both plates were left at room temperature for 12 hours.

Results are shown in the following table.

**Table**

| Feature | Mixture including cobalt salts and tertbutylperbenzoate | Mixture including benzopinacol |
|---|---|---|
| CIELAB L* Colour | 83.09 | 64.02 |
| CIELAB a*Colour | 4.54 | -0.03 |
| CIELAB b* Colour | 1.39 | 4.61 |
| Barcol Hardness | 40 | 40 |
| T_{g}(°C) | 47 | 47 |

CIELAB Colour: surveying of coordinates in the colorimetric space according to ASTM E308 standard;

Baracol Hardness: measuring the hardness of a plastic material according to ASTM D2583 standard;

Tg: glass transition temperature as determined through differential calorimetry scanning.

The test results showed that the hardening process efficiency is the same both for the mixture according to the present invention and for conventional mixtures. However, unlike the plate obtained from conventional compositions and methods, the plate obtained through hardening of a benzopinacol resin compound is not affected by deformation or significant reduction in volume. Moreover, the benzopinacol mixture is not intensely pink coloured by cobalt salts.

With a composition and a method according to the present invention it is thus possible thermally to control the polymerization reaction and, consequently, the hardening of the mixture comprising a resin compound and benzopinacol or derivatives thereof. It was noted that hardening of the mixture does not occur at temperatures lower than a threshold value (about 80°C).

A slight destabilization of the unsaturated resin compound with formation of macrogels may occur when the mixture is kept at temperatures higher than 50°C for a long time.

Thus, with a composition according to the present invention:
- the addition of the composition according to the present invention to a resin compound can be carry out any time before heating the resulting mixture to a temperature higher than the threshold temperature; and
- the production process of artificial stone materials is independent from breakdowns due to mechanical or power supply failures in the production plant, as the need of extracting the mixture upon being formed in the mould no longer exists.

Another advantage of using a composition according to the present invention is that the mixture for obtaining artificial stone materials is a stable single component system, whereas with conventional mixtures, as described above, two components had to be separately stocked, i.e. peroxide as initiator and cobalt salts as promoters, which components were mixed before loading the mixture into the mould.

The mixture according to the present invention also has extremely advantageous features both from handling in factory and environmental impact point of view, since the need of special precautions in the stocking or disposal problems no longer exists, which problems are to be faced with conventional compounds obtained from peroxides and cobalt salts.

The invention as described above is susceptible to numerous modifications and variations within the protection scope as defined by the claims.

## Claims

1. A composition for obtaining artificial stone materials including a compound selected from the group comprising benzopinacol and at least one derivative thereof.

2. A composition according to claim 1, **characterized in that** it includes at least one dispersant agent in a percentage from 10 to 95% by weight.

3. A composition according to claim 1 or 2, **characterized in that** it includes at least one antioxidant agent selected from the group comprising at least one of the following: quinones, hydrochinones, phenolic derivatives, metal complexes and metal salts.

4. A composition according to any previous claim, **characterized in that** it comprises a polymerization promoter compound selected from the group including acetoacetate derivatives, transitional metal salts and ammines.

5. A composition according to any previous claim, **characterized in that** it comprises 40.00 g of benzopinacol, 49.80 g of tristirylphenol ethoxy phosphate, 10.00 g of dietylacetoacetamide and 0.20 g of trimetylhydrochinone.

6. A mixture for obtaining an artificial stone material including a resin compound and a composition according to any claim 1 to 4 in a percentage from 0.1 to 10% by weight with respect to said resin compound.

7. A mixture according to claim 6, **characterised in that** said resin compound is an unsaturated resin compound selected from the group comprising at least one of the following: maleic, fumaric, tetrahydrophtalic, itaconic, acrylic or metacrylic, allylic, dicyclopentadyenic terminal and endometylentetrahydrophtalic resins.

8. A mixture according to claim 6 or 7, **characterised in that** it comprises at least one filler compound selected from the group comprising at least one of the following: oxides, carbonates, silicates, talc powders, ground stone materials and/or fragments of natural stone materials.

9. A mixture according to any claim 6 to 8, **characterised in that** it comprises 200 g of ortophtalic unsaturated polyester resin with 64% of solid content and a composition according to claim 5.

10. A mixture according to any claim 6 to 8, **characterised in that** it comprises 100 g of ortophtalic unsaturated polyester resin with 64% of solid contents, and 2.50 g of a composition according to claim 5.

11. A mixture according to any claim 6 to 8, **characterised in that** it comprises 50 g of unsaturated polyester resin with 22% of maleic instauration (22%) at 64% by weight in a mixture of acrylic and vinyl monomer reactants, and 1.50 g of a composition according to claim 5.

12. A mixture according to any claim 6 to 8, **characterised in that** it comprises 50 g of ortophtalic unsaturated polyester resin with 64% of solid contents, and 1.50 g of a composition according to claim 54.

13. A method of obtaining artificial stone materials comprising the following steps:
- preparing a composition according to any claim 1 to 5;
- mixing said composition with at least one resin compound in order to obtain a fluid-pasty mixture;
- transferring said pasty-fluid mixture into at least one mould; and
- heating said mixture thus obtained to a temperature higher than a predetermined threshold value thereby causing the polymerization thereof.

14. New use of benzopinacol or a derivative thereof as a polymerization promoter and as a thermal control for a mixture suitable for obtaining artificial stone materials.
